# EUROPEAN PATENT APPLICATION

(11) **EP 0 872 341 A1**
(43) Date of publication of application: **21.10.1998**
(21) Application number: 98104297.1
(22) Date of filing: 10.03.1998
(51) Int. Cl.: B41F 13/30, F16H 25/20, D21G 1/00

(54) **Control device for controlling movements of a plurality of mobile sequential elements along parallel straight paths**

(30) Priority: 11.03.1997 IT VR970021
(71) Applicant: Valmet Rotomec s.p.a., 24027 Nembro (BG) (IT)
(72) Inventor: Buffo, Flavio c/o Valmet Rotomec s.p.a., 24027 Nembro BG (IT)
(74) Representative: Popp, Eugen, Dr.

(57) **Abstract**

A control device for controlled movement of a plurality of mobile sequential elements along one or more parallel straight paths, which device (1) comprises a motion source, at least one motion transmission ball-recycling screw (2) that is operatively connected to the said motion-source, a plurality of lead nuts (3) each of which is screwed onto the or a common transmission screw (2), at least one annular receiving group (4) for each lead nut (3), said receiving group (4) being supported for rotation by a respective element (5) to be displaced and including engaging-disengaging means (6) arranged to secure it, upon control, to its respective mobile element (5) to prevent it from rotating, clamping means (19) designed to lock itself, upon control, when the said engaging-disengaging means (6) is in a disengaging position around the transmission screw (2) in order to make its respective lead nut (3) rigid in rotation with the said transmission screw (2), and to unlock itself to allow its respective transmission screw (2) to rotate inside the lead nut (3), so as to cause it to move along the screw (2) together with its own annular receiving group (4) and its respective mobile element to be displaced (5).

## Description

The present invention relates to a control device for controlling the movements of a plurality of mobile sequential elements along one or more parallel straight paths.

### BACKGROUND OF THE INVENTION

A typical, although not exclusive, application of the present invention is the relative displacement of one cylinder with respect to the other in a printing unit that traditionally requires the provision of complicated and costly transmission systems which can be a source of problems also for the replacement of the printing cylinders as they occupy most of the space around each printing unit.

### SUMMARY OF THE INVENTION

The main object of the present invention is to provide a control device for controlled movement of a plurality of mobile sequential elements along one or more parallel straight paths arranged to eliminate or drastically reduce the drawbacks referred to above.

Another object of the present invention is to provide a control device which makes it possible to use only one ball-recycling screw to transmit the motion to both in unison and separately to a plurality of mobile elements, e.g. the printing cylinders in a printing unit.

A further object of the present invention is to provide a control device of high efficiency and accuracy which can be applied to both already existing and newly constructed printing machines.

These and still further objects, which will better appear hereinbelow, are attained by a control device for controlled movement of a plurality of mobile sequential elements along one or more parallel straight paths, which device comprises a motion source, at least one motion transmission ball-recycling screw that is operatively connected to the said motion source, a plurality of lead nuts each of which is screwed onto the or a common transmission screw, and is characterised in that it comprises at least one annular receiving group for each lead nut, the said receiving group being supported for rotation by a respective element to be displaced and including engaging-desengaging means arranged to secure it, upon control, to its respective mobile element to prevent it from rotating, clamping means designed to lock itself, upon control, when the said engaging-desengaging means is in a desengaging position around the transmission screw in order to make its respective lead nut rigid in rotation with the said transmission screw, and to unlock itself to allow its respective transmission screw to rotate inside the lead nut, so as to cause it to move along the screw together with its own annular receiving group and its respective mobile element to be displaced.

Advantageously, the said engagement-disengagement means and the said clamping means are controlled by a control unit or electronic card and the said motion source comprises an electric low-power motor.

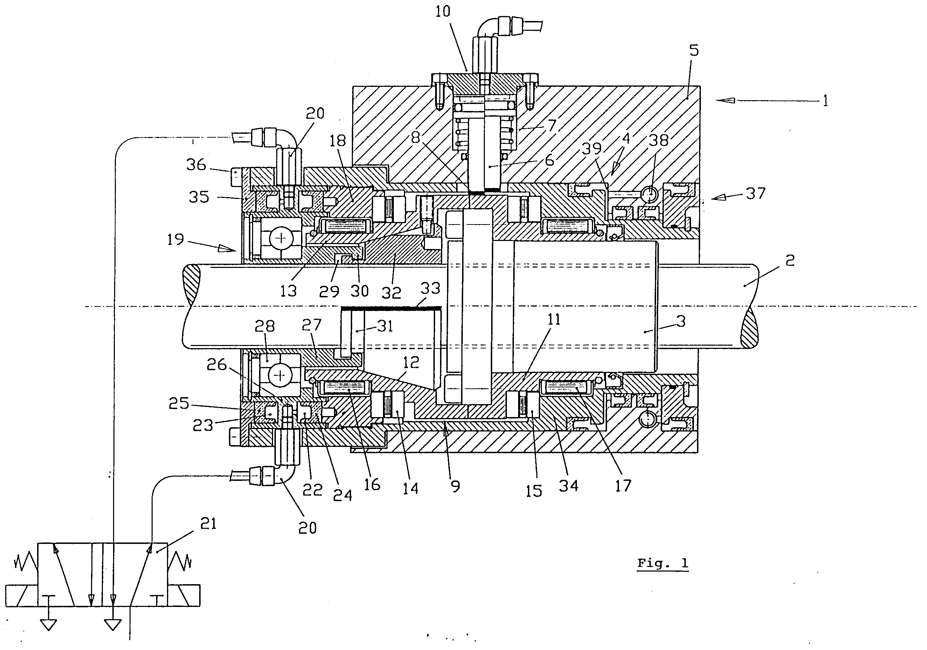

### BRIEF DESCRIPTION OF THE DRAWING

Further aspects and advantages of the present invention will better appear from the following description of an at present preferred embodiment illustrated by way of non limiting example in the accompanying drawing, in which the sole Figure is a longitudinal axial section view of a control device according to the invention mounted on a ball-recycling screw.

### DESCRIPTION OF THE PREFERRED EMBODIMENT

With reference to the Figure of the drawing, it will be noted that a control device, generally indicated at 1, according to the present invention is formed of a ball-recycling transmission screw 2, which can be rotated in either direction by an electric reversible low-power motor, not shown in the drawings. Two or more ball lead nuts 3 are screwed onto the transmission screw 2. Around each lead nut 3 there is provided a receiving annular group 4 for locating its respective lead nut, which is mounted for rotation on a respective element do be displaced, generally indicated at 5, e.g. constituted by a support of a printing cylinder in a printing unit.

Each support element 5 also carries an engagement-disengagement means, preferably comprising a locking pin 6 radially extending with respect to its respective lead nut 3 and elastically biased, e.g. by a cylindrical spiral spring 7. At its end facing its respective annular group 4 the pin 6 bears a pad 8 of a material having a high coefficient of friction in order to provide an effective locking action along an outer circumferential race 9 of the annular group 4, whereas at its other end it controlled by a single acting fluid-operated jack 10, e.g. a pneumatic jack, to be forced to abut, upon control, against the race 9 thereby keeping its respective lead nut 3 secured to the support 5 and thus fixed with respect to the ball-recycling screw 2.

Around each lead nut 3 there is secured a bearing support ring 11 which extends beyond an end of its respective lead nut 3 with an internally conical section 12 followed by a section 13 having an internal cylindrical surface.

The bearing support ring 11 externally delimits four seats for a respective bearing, i.e. two at their respective lead nut 3 and two at the sections 12 and 13. More precisely, the ring 11 has a pair of intermediate seats for receiving a respective radial roller bearing 14 and 15 and a pair of lateral seats for receiving a respective longitudinal roller bearing 16 and 17.

Around sections 12 and 13 of the bearing support ring 11 there is seated a tightening ring 18; overhead such a ring a pneumatic clamping device is mounted which is generally indicated at 19 and in communication via a conduit 20 with a suitable source (not shown) of a fluid under pressure, e.g. compressed air. The clamping device 19 comprises a slide electrovalve, generally indicated at 21 and arranged to direct the fluid flow either to an inner chamber 22 or to an outer chamber 23 provided with respective gaskets 24 and 25, so as to displace by a small length, e.g. by 1 mm, a displacer or slide 26 in longitudinal direction with respect to the screw 2 in either direction.

To the displacer 26 is operatively connected one end of an inner ring 27, a ball bearing 28 being arranged therebetween. Thus, the ring 27 is free to rotate with respect to the displacer 26, but follows the longitudinal displacements thereof. The ring 27 extends inside the gap between the bearing support ring 11 and the transmission screw 2 and terminates at its other end with an annular groove 29 facing the transmission screw 2 and delimiting an end tooth 30 which loosely engages with a plurality of radial grooves 31 formed in the same number of externally conical sectors 32 movably arranged in the conical gap between the frustoconical section 12 of the bearing support ring 11 and the transmission screw 2. The play between tooth 30 and grooves 31 is equal , for example, to about 1 mm.

Preferably, between the pairs of conical sectors 32 there is provided a resilient means 33, e.g. made of rubber, of any suitable type for resilient bias and return of the sectors 32 towards their expanded position, as it will be further explained hereinbelow. Moreover, taper of the conical sectors 32 is equal to that of section 12 of the bearing support ring 11.

Around the bearing support ring 11 and the tightening ring 18 the annular group 4 comprises a sleeve or annular receiving case 34 which preferably extends throughout the length of the control device 1. The sleeve 34 has inner sections for receiving therein the bearings 14, 15 and 17 and the tightening ring 18 and is closed at one end thereof by a closing ring 35 which is removably securable, e.g. by means of bolts 36, in front of the ring 18 and against which the displacer 26 can abut.

With this arrangement, when the pneumatic clamp 19 pulls the conical sectors 32, they became contracted against the transmission screw 2, and thus the entire equipment comprising the conical sectors 32, the ring 27, the bearing support ring 11 and the lead nut 3 is caused to rotate together with the transmission screw 2 once the locking pin 6 has been moved back by the spring 7 after the jack 10 has been released. In this case, the transmission screw 2 does not transmit any displacement movement to the support 5.

If, instead, the pneumatic clamp 19 holds the sectors 32 in backward resting position with respect to the transmission screw 2, also thanks to the action of the resilient means provided between one conical sector 32 and the other, and the locking pin 6 is urged against the race 9, the transmission screw 2 will rotate inside the lead nut 3, which is then caused to move parallel to the transmission screw 2 in either direction depending upon the direction of rotation of the same transmission screw.

As it will be easily understood, it is possible to control a number n of lead nuts 3 provided with a respective control device as that described above and screwed on the same transmission screw 2. As a matter of fact, it is sufficient to cause their respective locking pins 6 to move against their respective race 9 and to keep the conical sectors 32 in their rest position to cause all the lead nuts 3, and thus their respective support elements 5, to move all together. If, instead, one or more of the clamps 19 are operated, their respective lead nut 3 will be caused to rotate together with the transmission screw 2, and thus their respective support element 5 will remain stationary.

If desired, at the free end, i.e. that facing the closing ring 35, of the receiving sleeve 34 a pneumatic loading system, generally indicated at 37, can be provided which is arranged to be fed by pressure fluid via a conduit 38 in order to apply a longitudinal thrust in either direction through a slide electrovalve, not shown, by reacting against a relatively fixed portion 39 of the support 5. The system 37 constitutes an auxiliary means for causing the support 5 to effect a small longitudinal displacement, e.g. of about 1 cm, without causing the transmission screw 2 to rotate, e.g. for separating the cylinders upon occurrence of a printing stop of a printing machine especially when the transmission screw 2 is manually operated.

It will be noted that the control device is of hi versatility and makes it possible to attain all the objects referred to above.

The above described control device is susceptible to numerous structural modifications and variations within the scope of the inventions.

Thus, for example, the engaging-desengaging means instead of a locking pin 6 can comprise a tightening ring provided with suitable actuation means.

## Claims

1. A control device for controlled movement of a plurality of mobile sequential elements along one or more parallel straight paths, which device comprises a motion source, at least one motion transmission bal-recycling screw that is operatively connected to the said motion source, a plurality of lead nuts each of which is screwed onto the or a common transmission screw, said device further including at least one annular receiving group (4) for each lead nut (3), said receiving group (4) being supported for rotation by a respective element (5) to be displaced and including engaging-disengaging means (6) arranged to secure it, upon control, to its respective mobile element (5) to prevent it from rotating, clamping means (19) designed to lock itself, upon control, when the said engaging-disengaging means (6) is in a disengaging position around the transmission screw (2) in order to make its respective lead nut (3) rigid in rotation with the said transmission screw (2), and to unlock itself to allow its respective transmission screw (2) to rotate inside the lead nut (3), so as to cause it to move along the screw (2) together with its own annular receiving group (4) and its respective mobile element to be displaced (5).

2. A control device as claimed in Claim 1, wherein said engagement-disengagement means (6) and the said clamping means (19) are controlled by a control unit or electronic card.

3. A control device as claimed in Claim 1 or 2, wherein said motion source comprises an electric low-power motor.

4. A control device as claimed in any one of the preceding claims, wherein said engaging-disengaging means (6) comprises a locking pin which is arranged radially mobile with respect to its respective lead nut (3) and a linear actuator for the said locking device.

5. A control device as claimed in Claim 4, wherein said linear actuator comprises a single-acting jack (10) and loading resilient means (7) for the return movement of the said locking pin (6).

6. A control device as claimed in Claim 4 or 5, wherein at its end facing its respective annular group (4) the said locking pin (6) is provided with a pad (8) of high coefficient of friction to provide an effective locking action onto its respective annular group (4).

7. A control device as claimed in any one of the Claims 1 to 6, wherein said engagement-disengagement means comprises a tightening ring (18) and control means (21) for the said tightening ring (18).

8. A control device as claimed in any one of the preceding claims, wherein each annular group (4) comprises a bearing support ring (11) which is arranged around and is rigid in rotation with a respective lead nut (3), extends beyond one end of its respective lead nut (3) with a section (12) having an inner conical surface and delimits externally a plurality of receiving seats (12, 13) for rolling bearings.

9. A control device as claimed in Claim 8, wherein the bearing support ring (11) delimits two end seats for receiving therein a respective longitudinal roller bearing (16, 17) and two intermediate seats for receiving therein a respective radial roller bearing (14, 15).

10. A control device as claimed in Claim 8 or 9, wherein each annular group (4) comprises at least one tightening ring (18) around the said bearing support ring (11).

11. A control device as claimed in any one of the Claims 8 to 10, wherein said clamping means (19) comprises an annular element (27) which extends into a gap delimited between the said bearing support ring (11) and the said transmission screw (2), and a plurality of conical sectors (32) movably arranged at the said inner conical surface section (12) of the said bearing support ring (11) and operatively connected to the said annular element (27), whereby at each linear movement along the said transmission screw (2) of the said annular element (27) in a direction there corresponds a tightening of the conical sectors (32) onto the said transmission screw (2) owing to the sliding movement against the conical surface of the said bearing support ring (11), thereby causing its respective lead nut (3) to rotate together with the said transmission screw (2), whereas a displacement in the opposite direction causes the conical sectors (32) to become disengaged from the said transmission screw (2).

12. A control device as claimed in Claim 11, wherein said annular element (27) comprises an annular projection (30) which loosely engages with a plurality of radial grooves (31) formed in the said conical sectors (32).

13. A control device as claimed in Claim 11 or 12, wherein said clamping means (19) comprises a displacer (26) operatively connected at one end thereof to the said annular element (27) with the interposition of a rolling bearing (28), whereby the said annular element (27) is free to rotate with respect to the said displacer (26) but is engaged to follow any longitudinal movement, and a slide electrovalve (21) for a pressure fluid to cause, upon control, the said displacer (26) in either longitudinal direction along the said transmission screw (2).

14. A control device as claimed in any one of the Claims 11 to 13, wherein between each pair of conical sectors (32) a resilient means (33) is provided for the return movement of the said sectors (32) to their expanded position.

15. A control device as claimed in any one of the preceding claims, wherein in front of the said second tightening ring (18) there is provided a constant bias pneumatic system which is arranged to apply a longitudinal load in either direction for causing the said element (5) to move parallel to the said transmission screw (2).

16. A control device as claimed in Claim 15, wherein said pneumatic system comprises a slide electrovalve (21).
